# EUROPEAN PATENT SPECIFICATION

(11) **EP 1 866 234 B1**
(45) Date of publication and mention of the grant of the patent: **09.11.2011**
(21) Application number: 06717029.0
(22) Date of filing: 17.03.2006
(51) Int. Cl.: B01F 3/04, B67D 1/00, A23L 2/54, F25D 23/12

(54) **SYSTEM FOR CARBONIZING A LIQUID**
VORRICHTUNG ZUM KARBONISIEREN EINER FLÜSSIGKEIT
DISPOSITIF DE CARBONISATION D'UN LIQUIDE

(30) Priority: 21.03.2005 SE 0500636
(43) Date of publication of application: 19.12.2007
(73) Proprietor: Electrolux Home Products Corporation N.V., 1130 Brussel (BE)
(72) Inventor: EKLUND, Jan, S-542 31 Mariestad (SE); MAGNUSSON, Magnus, S-542 73 Mariestad (SE); EKDAHL, Christer, S-531 53 Lidköping (SE); ANDERSSON, Ulf, S-542 32 Mariestad (SE); JOHANSSON, Daniel, S-542 43 Mariestad (SE)
(74) Representative: Markovina, Paolo
(86) International application number: PCT/SE2006/000344
(87) International publication number: WO 2006/101435

(56) References cited:
- WO-A1-02/02455
- DE-C- 688 790
- DE-U1- 29 822 696
- FR-A- 1 219 369
- GB-A- 2 107 203
- US-A- 3 926 342
- US-A- 4 191 784
- US-A- 4 850 269
- US-A- 4 940 164
- US-A- 4 940 164
- US-A- 5 310 088
- US-A- 5 417 147
- US-A- 5 611 937
- US-B1- 6 260 477

## Description

### Field of the invention

The present invention relates to a system for carbonizing a liquid, comprising a liquid inlet, a pressurized tank for carbon dioxide, a mixing tank for receiving a mix of carbon dioxide and liquid. Further it is possible to tap cold carbonized drinking water from the system.

### Technical background

Techniques according to prior art for carbonization of water is usually performed by adding carbon dioxide at the bottom of a tank causing gas bubbles to flow through the water, to a water level inside the tank, and/or spraying/dispensing water into the tank and exposing it to the carbonizing atmosphere above the water level inside the tank.

There is problem with prior art techniques when it comes to variations in the conditions, such as, temperature, water pressure, for example different municipal water pressure for different areas and countries. When carbonized beverages, e.g. water, are delivered in bottles the carbonization level in the bottle will decrease if the bottle is stored after it has been opened and used. Therefore it would be appreciated if it was possible to provide cold, carbonized beverages direct to consumers, for example in the kitchen of a household.

US 4940164 discloses an improved method and apparatus for dispensing carbonated water from a supply of cooled water including thermal coaction of carbonator apparatus with a reservoir of cooled water, and including a control system to inhibit water-pumping operation into the carbonator apparatus after the reservoir of cooled water is depleted.

GB 2107203 relates to continuously operating a low pressure apparatus for producing gas-enriched liquids and it is used to advantage preferably when built into refrigerators. The apparatus according to the invention has an absorbing tank, a discharge valve, a gas cartridge or bottle and a gas inlet valve. A self-priming centrifugal atomiser impeller is mounted on the shaft of an electric motor adjacent the upper part of the absorbing tank. A decompressor valve is mounted adjacent the upper part of the absorbing tank (1). The gas inlet valve connected to a carbon dioxide storage device, a pressure reducing valve connected to a water supply, and the dispensing valve are arranged on the lower part of the absorbing tank.

Another equipment for the production of carbonized water is disclosed in DE 298 22 696 U1.

### Summary of the invention

One object of the present invention is to provide a carbonizing system for a drinking liquid, preferably water, that in relation to prior art carbonization systems, provides a system with improved carbonization.

Another object of the present invention is to provide a carbonization system that can use incoming water with a variation in pressure.

Another object of the present invention is to provide a system that can be built into a refrigerator.

A system for carbonizing a liquid comprising a liquid inlet, a pressurized tank for carbon dioxide, a mixing tank for receiving a mix of carbon dioxide and liquid. The system further having a first passage for feeding liquid and a second passage for feeding carbon dioxide. For mixing gas and liquid in the mixing tank these are received by the tank at its lower portion

The first passage for liquid and a second passage for carbon dioxide is further converging in a mixing point to a common passage before the mix of liquid and carbon dioxide is fed, by the common passage, to the mixing tank. The convergation of the first and second passages could be performed by means of for example a T-coupling or a Y-coupling to a common passage. The system is adopted (pressure and volume flow) in such a way that a suitable mix of liquid and gas is mixed in the mixing point and fed into the mixing tank.

Advantageously the pressure of the carbon dioxide in the second passage is lower than the pressure of the liquid in the first passage. This difference in pressure is balancing the system for receiving a desirable mix of liquid and carbon dioxide.

Advantageously a throttle is provided at said first passage, for liquid, before said mixing point. Said throttle is provided in a vicinity of said mixing point, wherein a pressure drop of the liquid pressure is achieved before the mixing point. This pressure drop in the first passage in combination with the lower pressure of the gas in the second passage will provide desired conditions for a good mix of liquid and gas in the mixing point.

Advantageously a differential pressure valve is provided before said throttle and before said mixing point, the differential pressure valve is provided for piloting the pressure of the carbon dioxide in the second passage to a pressure lower than the pressure of the liquid in the first passage. This differential pressure valve will ensure that the gas pressure in the second passage is reduced to a pressure level lower, preferably 0,4-0,8 bar lower, than the liquid pressure in the first passage. The differential valve will ensure this pressure difference between the gas and the liquid independent of if there is a variation in the liquid pressure. The used, liquid pressure, incoming to the system, should preferably be over 2 bar to achieve a good performance for the system. The pressure in the pressurized carbon dioxide tank is usually many times higher than the pressure of the liquid.

Advantageously a liquid tank is provided between the liquid inlet and the mixing point. Preferably this liquid tank is provided before the differential valve and positioned in a refrigerated chamber. One purpose for the liquid tank is to serving as a buffer and also provide cool liquid to the mixing point, since for example solving of carbon dioxide in water is facilitated in cold conditions, 0-6°C.

Preferably both the liquid tank and the carbon dioxide tank is provided in a refrigerated chamber, wherein the liquid and the carbon dioxide is refrigerated before mixing at the mixing point. This will give a high level of carbonization of the liquid.

Advantageously the mixing tank is of a hose tank type, wherein the main hose extension is oriented substantially vertical. One advantage with the hose tank is fast cooling, this is since the hose tank has a large cooling area. The hose tank is drained at one end of the tank and the opposite end of the tank is refilled, this gives the advantage that the dilution of the liquid in the tank is minimized. Further the recovery time for liquid within the hose tank is shorter than with a conventional tank, this is advantageously both for cooling and carbonization performance for the system.

Advantageously the common passage, which is feeding mixed liquid and carbon dioxide to the mixing tank, is provided at a lower portion of the mixing tank. The mixing tank is preferably of a hose tank type where the main hose extension is oriented substantially vertical which gives an improved carbonization of the liquid in the tank. Preferably the inlet to the mixing tank, from the common passage, is connected to the lower end of a vertical hose of the tank.

An advantage of the present invention is that it does not need a pump or similar equipment for increasing of the water pressure in the system.

With the prerequisites; municipal water pressure (usually above 3 bar) and cooling by a refrigerator the system according to this invention is an efficient way of producing cool carbonized water. The carbonization of the water is achieved by mixing water with carbon dioxide at a low temperature about 4-8°C, preferably 0-6°C. If the carbon dioxide pressure at the mixing point is too low the carbonization efficiency is reduced, on the other hand if the carbon dioxide pressure is too high at the mixing point the flow of water will be impeded, with reduced carbonization as a result.

### Brief description of drawings

By way of example, embodiments of the present invention will now be described with reference to the accompanying figures of drawings in which;
Fig 1 is a perspective view of partly exploded refrigerator;
Fig 2 is a schematic diagram of the carbonization system according to the invention.

### Description of Preferred Embodiments

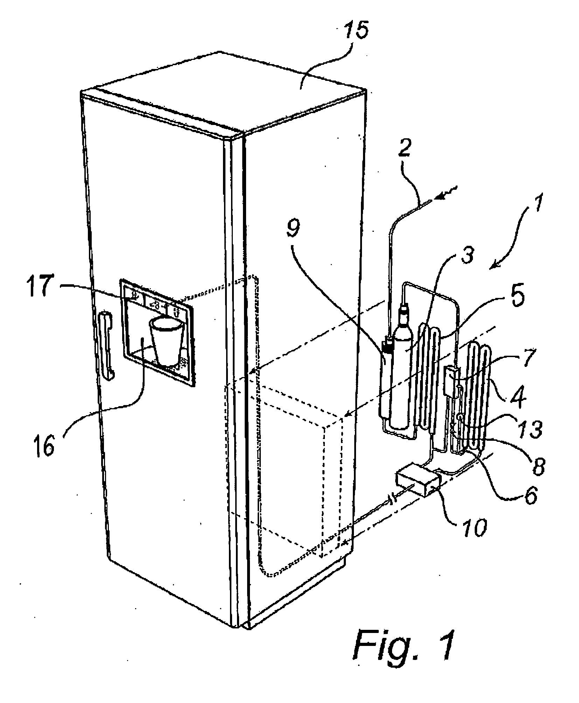

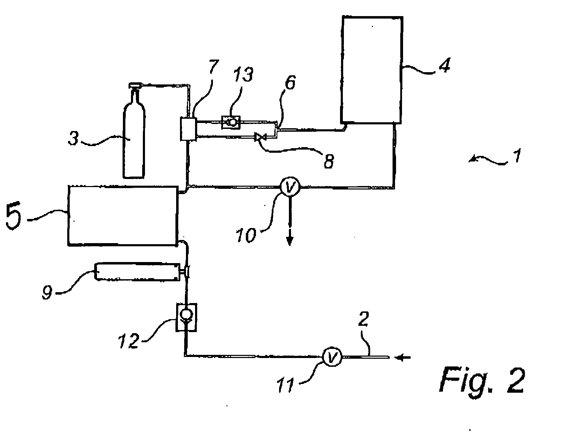

One embodiment of the carbonization system, according to the invention, will now be described in relation to figures 1 and 2.

Fig 1 depicts a refrigerator with a recess 16 in the door, which recess 16 is accessible from the outside of the refrigerator for putting a glass, cup, bottle, etc. Further the control panel 17 is operable for selection of cold plain water or cold carbonized water, the system could also be used for other kind of beverages. It is also possible to select, from the control panel 17, the amount of water to be taped from the system, for example by using a press button or tap.

The carbonizing and water cooling system 1 is positioned in the lower inner part of the refrigeration chamber. A pipe and/or hose is provided for transporting the carbonized water from the system to the to the recess 16 in the door of the refrigerator 15. A hose or pipe 2 is used as water inlet to the system 1, for example from the municipal water supply system, this hose or pipe 2 is connected to a carbon filter 9 for filtration of the water. As shown in fig 2 a fresh water valve 11 is provided at the incoming pipe 2 for controlling the water. Further is a non return valve 12 provided on the incoming pipe 2 between the fresh water valve 11 and the filter 9. After the incoming water has been filtered in the carbon filter 9 it is fed to the rigid hose tank 5, for refrigeration of the water. By use of the valve 10 it is possible to tap cold plain water direct from the tank 5 to the consumer.

For carbonization of water, the water is flowing from the water tank 5 via the differentiation valve 7 and the throttle 8 to the mixing point 6. A non-return valve may also be used in some cases, preferably positioned between the differentiation valve and the throttle 8. The differentiation valve 7 will reduce the gas pressure from the carbon dioxide pressure vessel 3 to a level 0,4-0,8 bar lower than the water pressure in the differentiation valve 7. This reduction of the gas pressure, to a level slightly lower than the water pressure, could of course be performed in any other suitable way. There is a non return valve 13 provided on the passage/pipe, for gas, from the valve 7.

The water from the first pipe is mixed with gas from the second pipe in the T-coupling 6. This convergation of the first and second pipe for mixing of the gas and the water can be performed in other suitable ways. The carbonization result is affected by the balance between pressure and flow of both the water and the gas at the mixing point 6, the throttle 8 and the differential valve 7 are used to control this balance.

When the consumer tap carbonized water from the system, the pressure decrease in the mixing tank 4 and consequently the higher pressure of water and gas at the T-coupling 6 provides a flow of mixed water and gas from the T-coupling 6 to the mixing tank 4. In the mixing tank the carbon dioxide is dissolved in the water and carbonic acid is produced during this process. The pressurized water and gas together with the pre-cooling, of gas and water, helps the carbon dioxide to dissolve in the water in the mixing tank 4.

Since the gas is gradually dissolved in the water in the mixing tank 4 the volume of the content in the mixing tank will decrease during the solving of gas in the water and hence more gas/water mix will be feed into the mixing tank 4 from the T-coupling 6 gradually.

Both the water tank 5 and the mixing tank 4 are hose tanks. In this embodiment the hose tank is a rigid hose tank produced by assembling two plastic halves, which are welded together. Another two halves are welded together in the same way and connected with the first two welded halves by a U-coupling, in this way each rigid hose tank will consist of two layers of hoses. The rigid hose tank has an extended length and provides a large cooling surface towards the refrigerating chamber (4-6°C) in which it is positioned. Refilled water (with a temperature higher than 4-6°C and/or not yet fully carbonized) to the hose tanks (4,5) will not be mix directly with the whole content of the tank due to the extension of the hose tank, and hence dilution in the tank is avoided. Already processed (cool and/or carbonized) water will not be mixed with refilled water to the same extent as would be the case for a conventional tank, this helps to keep the recovery time down for the system after each dispensing. Both refilling and dispensing from the mixing tank 4 is performed from the bottom, or at least from a lower part, of the mixing tank 4. Refilling is performed in one, lower, end of the hose tank (4,5) and dispensing is performed from the other, also lower positioned, end of the hose tank (4,5).

When the consumer tap plain water from the system, the pressure decrease in the water tank 5 and consequently the incoming water with a higher pressure will refill the water tank 5.

The filter 9 provides a filtration of all water passing through the system, both for keeping the system clean and for providing a clean filtrated water to the consumer. The dimension of the hoses are normally not important since the present system will use one quarter of an inch or larger. Moreover, the pressure drop is will be kept low due to short hose lengths.

The system can deliver 3,5 liter (1,75 liter, wait 5 minutes, 1,75 liter) cold carbonized water and the recovery time for the system is less than 5 hours.

An advantage of the system 1 is that it can be used with different incoming water pressure and still prepare carbonized water with a satisfying carbonization level. With a variation in water pressure the system can still achieve a good carbonization, this is since the mixing of gas and water is performed before the mixing tank 4. The mixing tank serves as a buffer where also the carbonization process can continue for a period of time after the gas and water has been mixed in the T-coupling 6. The gas/water mix in the mixing tank 4 will continuously be cooled since the mixing tank 4 is provided in a refrigerated area, for example inside a refrigerator 15.

The system will be operable with an incoming water pressure of 2 bar or higher. In 80% of the European countries the municipal water pressure is about 4 bar.

## Claims

1. A system (1) for carbonizing a liquid comprising a liquid inlet (2), a pressurized tank for carbon dioxide (3), a mixing tank (4) for holding a mix of carbon dioxide and liquid, the system further comprising a first passage for feeding liquid and a second passage for feeding carbon dioxide,
said liquid and carbon dioxide being fed to the lower portion of the mixing tank (4), **characterized in that** a differential pressure valve (7) is provided, before a throttle (8) provided at said first passage and before a mixing point (6) where the first and second passage converge, for piloting the pressure of the carbon dioxide in the second passage to a pressure lower than the pressure of the liquid in the first passage.

2. A system (1) according to claim 1, **characterized in that** the first passage for liquid and the second passage for carbon dioxide is converging in said mixing point (6) to a common passage before the mix of liquid and carbon dioxide is fed, by the common passage, to the mixing tank (4).

3. A system (1) according to claim 2, wherein the common passage, which feeds mixed liquid and carbon dioxide to said mixing tank (4), is provided at a lower portion of said mixing tank (4).

4. A system (1) according to any of the claims 2 - 3, wherein the pressure of the carbon dioxide in the second passage is lower than the pressure of the liquid in the first passage.

5. A system (1) according to any of the preceding claims, wherein said throttle (8) is provided in a vicinity of said mixing point (6), wherein a pressure drop of the liquid pressure is achieved before the mixing point (6).

6. A system (1) according to any of the preceding claims, wherein a liquid tank (5) is provided between the liquid inlet (2) and the mixing tank (4).

7. A system (1) according to any of the preceding claims, wherein a liquid tank (5) is provided between the liquid inlet (2) and the mixing point (6).

8. A system (1) according to claim 6, wherein both the liquid tank (5) and the carbon dioxide tank (3) is provided in a refrigerated chamber, wherein the liquid and the carbon dioxide is refrigerated before mixing.

9. A system (1) according to any of the preceding claims, wherein said mixing tank (4) is of a hose tank type, wherein the main hose extension is oriented substantially vertical.

10. A system (1) according to any of the preceding claims, wherein the liquid mixed with the carbon dioxide is dispensed from a lowered positioned end of said mixing tank (4).

## Patentansprüche

1. System (1) zum Carbonisieren einer Flüssigkeit, umfassend einen Flüssigkeitseinlass (2), einen unter Druck stehenden Tank für Kohlendioxid (3) und einen Mischtank (4) zur Aufnahme eines Gemischs von Kohlendioxid und Flüssigkeit, wobei das System ferner einen ersten Kanal zur Zuführung von Flüssigkeit und einen zweiten Kanal zur Zuführung von Kohlendioxid umfasst, wobei die Flüssigkeit und das Kohlendioxid dem unteren Abschnitt des Mischtanks (4) zugeführt werden, **dadurch gekennzeichnet, dass** ein Differenzdruckventil (7) vor einer Drossel (8), die am ersten Durchgang angebracht ist, und vor einem Mischpunkt (6), wo sich der erste und der zweite Kanal vereinen, vorgesehen ist, um den Druck des Kohlendioxids im zweiten Kanal auf einen Druck unter dem Druck der Flüssigkeit im ersten Kanal zu regeln.

2. System (1) gemäß Anspruch 1, **dadurch gekennzeichnet, dass** sich der erste Kanal für Flüssigkeit und der zweite Kanal für Kohlendioxid am Mischpunkt (6) zu einem gemeinsamen Kanal vereinen, bevor die Mischung aus Flüssigkeit und Kohlendioxid über den gemeinsamen Kanal dem Mischtank (4) zugeführt wird.

3. System (1) gemäß Anspruch 2, wobei der gemeinsame Kanal, der das Gemisch aus Flüssigkeit und Kohlendioxid dem Mischtank (4) zuführt, an einem unteren Abschnitt des Mischtanks (4) vorgesehen ist.

4. System (1) gemäß einem der Ansprüche 2 - 3, wobei der Druck des Kohlendioxids im zweiten Kanal niedriger ist als der Druck der Flüssigkeit im ersten Kanal.

5. System (1) gemäß einem der vorangehenden Ansprüche, wobei die Drossel (8) in einer Nähe des Mischpunkts (6) vorgesehen ist, wobei ein Druckabfall des Flüssigkeitsdrucks vor dem Mischpunkt (6) erreicht wird.

6. System (1) gemäß einem der vorangehenden Ansprüche, wobei ein Flüssigkeitstank (5) zwischen dem Flüssigkeitseinlass (2) und dem Mischtank (4) vorgesehen ist.

7. System (1) gemäß einem der vorangehenden Ansprüche, wobei ein Flüssigkeitstank (5) zwischen dem Flüssigkeitseinlass (2) und dem Mischpunkt (6) vorgesehen ist.

8. System (1) gemäß Anspruch 6, wobei sowohl der Flüssigkeitstank (5) wie der Kohledioxidtank (3) in einer gekühlten Kammer vorgesehen sind, wobei die Flüssigkeit und das Kohlendioxid vor dem Mischen gekühlt werden.

9. System (1) gemäß einem der vorangehenden Ansprüche, wobei der Mischtank (4) ein Schlauchtanktyp ist, bei dem die Hauptschlaucherstreckung im wesentlichen vertikal verläuft.

10. System (1) gemäß einem der vorangehenden Ansprüche, wobei die mit dem Kohlendioxid gemischte Flüssigkeit von einem tiefergesetzten Ende des Mischtanks (4) abgegeben wird.

## Revendications

1. Système (1) pour carbonater un liquide comprenant un orifice d'entrée de liquide (2), un réservoir sous pression pour le dioxyde de carbone (3), un réservoir de mélange (4) destiné à contenir un mélange de dioxyde de carbone et de liquide, le système comprenant en outre un premier passage pour amener le liquide et un second passage pour amener le dioxyde de carbone,
ledit liquide et ledit dioxyde de carbone étant amenés vers une partie inférieure du réservoir de mélange (4), **caractérisé par** la présence d'une soupape de pression différentielle (7), avant un dispositif d'étranglement (8) situé au niveau dudit premier passage et avant un point de mélange (6), où le premier passage et le second passage convergent, pour piloter la pression du dioxyde de carbone dans le second passage à une pression inférieure à la pression du liquide dans le premier passage.

2. Système (1) selon la revendication 1, **caractérisé en ce que** le premier passage pour le liquide et le second passage pour le dioxyde de carbone convergent dans ledit point de mélange (6) vers un passage commun avant que le mélange de liquide et de dioxyde de carbone soit amené, par le passage commun, vers le réservoir de mélange (4).

3. Système (1) selon la revendication 2, dans lequel le passage commun, qui amène le liquide et le dioxyde de carbone mélangés vers ledit réservoir de mélange (4) se trouve sur une partie inférieure dudit réservoir de mélange (4).

4. Système (1) selon l'une quelconque des revendications 2 et 3, dans lequel la pression du dioxyde de carbone dans le second passage est inférieure à la pression du liquide dans le premier passage.

5. Système (1) selon l'une quelconque des revendications précédentes, dans lequel ledit dispositif d'étranglement (8) se trouve au voisinage dudit point de mélange (6), dans lequel une chute de pression de la pression de liquide est obtenue avant le point de mélange (6).

6. Système (1) selon l'une quelconque des revendications précédentes, dans lequel un réservoir de liquide (5) se trouve entre l'orifice d'entrée de liquide (2) et le réservoir de mélange (4).

7. Système (1) selon l'une quelconque des revendications précédentes, dans lequel un réservoir de liquide (5) se trouve entre l'orifice d'entrée de liquide (2) et le point de mélange (6).

8. Système (1) selon la revendication 6, dans lequel le réservoir de liquide (5) et le réservoir de dioxyde de carbone (3) sont tous deux situés dans une chambre réfrigérée, dans laquelle le liquide et le dioxyde de carbone sont réfrigérés avant le mélange.

9. Système (1) selon l'une quelconque des revendications précédentes, dans lequel ledit réservoir de mélange (4) est de type réservoir à tuyau flexible, dans lequel la prolongation du tuyau flexible principal est orientée sensiblement à la verticale.

10. Système (1) selon l'une quelconque des revendications précédentes, dans lequel le liquide mélangé avec le dioxyde de carbone est distribué depuis une extrémité en position abaissée dudit réservoir de mélange (4).
